# EUROPÄISCHE PATENTSCHRIFT

(11) **EP 2 783 571 B1**
(45) Veröffentlichungstag und Bekanntmachung des Hinweises auf die Patenterteilung: **23.11.2016**
(21) Anmeldenummer: 13160903.4
(22) Anmeldetag: 25.03.2013
(51) Int. Cl.: A22C 11/02, A22C 11/10, A22C 11/12

(54) **Vorrichtung und Verfahren zur Steuerung einer Füllmaschine**
Method and device for operating a filling machine
Dispositif et procédé de commande d'une machine de remplissage

(43) Veröffentlichungstag der Anmeldung: 01.10.2014
(73) Patentinhaber: Albert Handtmann Maschinenfabrik GmbH & Co. KG, 88400 Biberach (DE)
(72) Erfinder: Schmid, Klaus, 88499 Riedlingen (DE)
(74) Vertreter: Grünecker Patent- und Rechtsanwälte PartG mbB

(56) Entgegenhaltungen:
- EP-A1- 1 607 000
- EP-A1- 1 844 659
- US-A1- 2007 180 795

## Beschreibung

Die Erfindung betrifft ein Verfahren zum Steuern einer Füllmaschine mit einer Clipmaschine sowie eine entsprechende Vorrichtung.

Die US 2007/180,795 A1 beschreibt bereits eine Kombination aus einem Clipper und einer Füllmaschine, wobei beispielsweise die Fördereinrichtung (Füllmaschine) und die Verschließeinrichtung synchronisiert werden. Die Steuerung des Füllers ist mit der Verschließeinrichtung verbunden. Um das Problem zu verhindern, dass sich pastöse Masse vor den Verdrängerelementen aufstaut, wird eine bewegliche Darmbremse vorgesehen. Diese Druckschrift zeigt nicht, dass das Geschwindigkeitsprofil des Förderwerks in Förderwerkszyklen periodisch wiederholt wird und dass die Startzeit eines Förderwerkzyklus in Abhängigkeit der Position der Clippscheren bestimmt wird und die Steuereinrichtung ein entsprechendes Startsignal an das Förderwerk sendet und wobei die Steuereinrichtung frühestens ein Startsignal an das Förderwerk sendet, wenn der Abstand der Clipperscheren zueinander ausreichend groß ist, dass ein erzeugtes Wurstkaliber durch die Öffnung der Clipperscheren passt.

Die EP 1 607 000 A1 zeigt bereits eine gemeinsame Steuerung für Clippmodul und Fülleinheit. Hier wird jedoch kein Clipperbewegungsprofil beschrieben sondern nur ein entsprechendes Startsignal für den Clipper ausgegeben. Hier wird in Kauf genommen, dass bei geschlossenem Clipper stets Füllgut ausgestoßen wird und gegen die Scheren läuft.

Die EP 1 844 659 A1 beschreibt bereits eine Direktanbindung eines Clippers an einen Füller. Es wird bereits beschrieben, dass die beiden Einheiten aufeinander abgestimmte Arbeitsprozesse aufweisen können.

Bei der Wurstherstellung wird bekannterweise ein von einer Füllmaschine gefüllter Wurststrang mit sogenannten Clipperscheren abgeteilt, wobei die pastöse Masse von den Clipperscheren, die sich aufeinander zubewegen, verdrängt wird. Zwischen den Clipperscheren wird dann ein sogenannter Clip oder Doppelclip gesetzt, der die einzelnen Wurstportionen verschließt. Die Würste können dann zwischen dem Doppelclip durchtrennt werden.

Die Wurstherstellung mit einer Clipmaschine kann in folgende Ablaufschritte aufgeteilt werden:
1. Füllmaschine: Förderwerk stößt Portion aus und stoppt nach eingestelltem Volumen.
2. Clipmaschine: Verdrängerscheren bewegen sich aufeinander zu und schließen → Füllgut wird verdrängt.
3. Clipmaschine: Die Abteilstelle kann gespreizt werden, wobei sich die Verdrängerscheren voneinander wegbewegen.
4. Clipmaschine: Setzten eines Clips, wodurch die Portionen verschlossen werden.
5. Clipmaschine: Die Verdrängerscheren öffnen sich wieder.

Diese Schritte werden zyklisch wiederholt.

In der industriellen Wurstherstellung wird eine möglichst hohe Portioniergenauigkeit bei gleichzeitig hohem Portioniertakt gefordert. Um dies zu erreichen, ist es erforderlich, die Start- und Stoppbewegung der Füll- und Clipmaschine in Bezug auf die Überlagerung der Bewegung der Verdrängerscheren und der Bewegung des Förderwerks, die Geschwindigkeit und Beschleunigung der Verdrängerscheren beziehungsweise des Förderwerks aufeinander abzustimmen. Insbesondere muss der Übergang zwischen den oben genannten Schritten 1 und 2 sowie 5 und 1 optimiert werden. Eine Änderung des Bewegungsprofils der Füllmaschine bedingt auch eine Anpassung der Clipperscherenbewegung und umgekehrt, um eine optimale Portionierung zu gewährleisten. Diese Problematik tritt am stärksten zum Vorschein bei hohem Portioniertakt und kleinem Portionsvolumen (Verhältnis Portionszeit zu Portionspause < 3).

Zum Abstimmen der Funktionen der Clipmaschine und der Füllmaschine gibt es bereits eine funktionierende aber sehr fehleranfällige und aufwändige Lösung.

Die Einstellung der Geschwindigkeit, Beschleunigung und Überlagerung wird an der Füll- und Clipmaschine getrennt voneinander vorgenommen. Mit den bestehenden Parametern ist es zwar möglich, die Synchronisation zwischen Füll- und Clipmaschine einzustellen, aber die Einstellung erfolgt in der Praxis schrittweise und dauert sehr lange.

Sobald zum Beispiel die Geschwindigkeit an der Füllmaschine verstellt wird, ist diese zeitaufwändige Neueinstellung zu wiederholen, was in der Praxis oftmals nicht gemacht wird, und was wiederum zu schlecht eingestellten Maschinen führen kann.

Hiervon ausgehend liegt der vorliegenden Erfindung die Aufgabe zugrunde, ein Verfahren und eine Vorrichtung bereitzustellen, mit der auf einfache und zuverlässige Art und Weise eine Füllmaschine mit einer Clipmaschine gesteuert werden kann und insbesondere die Funktionen von Füll- und Clipmaschine einfach und zuverlässig aneinander angepasst werden können.

Erfindungsgemäß wird diese Aufgabe durch die Merkmale der Ansprüche 1 und 12 gelöst.

Gemäß der vorliegenden Erfindung können bei dem Verfahren zum Steuern einer Füllmaschine mit einer Clipmaschine, die Clipmaschine und die Füllmaschine über eine Kommunikationsschnittstelle Prozessdaten, wie z.B. Prozessparameter, Startsignale etc. austauschen. Unter Kommunikationsschnittstelle wird hier mindestens eine Kommunikationsschnittstelle verstanden. Durch die Kommunikationsmöglichkeit zwischen Clipmaschine und Füllmaschine können Funktionen der Clipmaschine, insbesondere das Bewegungsprofil von gegenüberliegenden Clipperscheren und Funktionen der Füllmaschine, insbesondere das Geschwindigkeitsprofil eines Förderwerks von einer Steuereinrichtung automatisch zueinander passend eingestellt werden. Das bedeutet, dass bei Änderungen von Parametern, die das Förderwerk der Füllmaschine betreffen, über die Steuerung dann automatisch das Bewegungsprofil der Clipscheren angepasst werden kann, ohne dass ein aufwändiges Einstellen an der Clipmaschine notwendig ist. Unter einer Steuerungseinrichtung versteht man, dass entweder eine kombinierte Steuerung für Füllmaschine und Clipmaschine vorgesehen ist, oder aber dass die Füllmaschine und die Clipmaschine jeweils eine eigene Steuerung aufweisen kann.

Das Bewegungsprofil der Clipscheren stellt das Ausmaß ihrer Bewegung in Abhängigkeit der Zeit dar.

Das Geschwindigkeitsprofil des Förderwerks stellt die Fördergeschwindigkeit bzw. Füllgeschwindigkeit des Förderwerks, z.B. Drehgeschwindigkeit einer Flügelzellenpumpe, in Abhängigkeit der Zeit dar.

Durch den Informations- beziehungsweise Signalaustausch zwischen Clipmaschine und Füllmaschine beziehungsweise deren Steuerungen kann ein einfaches Einstellen erfolgen. Somit kann verhindert werden, dass die ausgestoßene Portion durch die Scheren undefiniert gebremst wird. Außerdem kann verhindert werden, dass der Füllgutausstoß beim Start gegen die geschlossenen Scheren fährt.

Bei einer Änderung von Füllparametern, zum Beispiel der Füllgeschwindigkeit, erfolgt eine automatische Nachberechnung des Geschwindigkeitsprofils des Förderwerks sowie des Bewegungsprofils der Clipperscheren sowie deren zeitliche Überlagerung. Durch den Informationsaustausch über die Kommunikationsschnittstelle entfällt das manuelle Nachjustieren der Clip- und Füllmaschine.

Gemäß der vorliegenden Erfindung können Füllparameter für die Funktion des Förderwerks der Füllmaschine eingestellt werden, sowie Clipperparameter für die Funktion der Clipmaschine. Dabei können die einzelnen Parameter vom Bediener eingegeben oder vorab z.B. werksseitig eingespeichert sein. Eine erste Steuerung kann in Abhängigkeit der Füllparameter das Geschwindigkeitsprofil des Förderwerks erstellen. Eine zweite Steuerung kann in Abhängigkeit der Clipperparameter und des Geschwindigkeitsprofils des Förderwerks ein Bewegungsprofil für die Clipperscheren bestimmen, beziehungsweise berechnen. Dabei kann die erste Steuerung beispielsweise die Füllmaschinensteuerung sein und die zweite Steuerung die Clipmaschinensteuerung. Es ist jedoch auch möglich, dass beide Steuerungen in einer Steuereinheit zusammengefasst sind.

So kann durch das bekannte Geschwindigkeitsprofil des Förderwerks das ideale darauf abgestimmte Bewegungsprofil für die Clipperscheren berechnet werden.

Als Clipperparameter werden zumindest folgende oder äquivalente Parameter eingestellt : Wurstkaliber, Clipperscherengeschwindigkeit, gegebenenfalls Scherengeometrie. Gemäß einem bevorzugten Ausführungsbeispiel kann zusätzlich auch die Clipperscherenbeschleunigung eingegeben werden, (bzw. die Verzögerung) mit der die Clipperscheren auf eine bestimmte Geschwindigkeit gebracht werden können. Somit können beispielsweise, wie noch näher erläutert wird, die Rampenzeiten der Clipperscherengeschwindigkeit während der Portionszeit so eingestellt werden, dass die Clipperscherengeschwindigkeit nicht Null wird. Unter Wurtkaliber versteht man den Durchmesser der zu erzeugenden Portion. Unter Clipperscherengeschwindigkeit versteht man entweder die Geschwindigkeit des Clipperscherenantriebs, beispielsweise die Rotationsgeschwindigkeit des Antriebs oder aber die Geschwindigkeit der Clipperscheren senkrecht zur Mittelachse des Wurststrangs. Ferner kann die Möglichkeit einer Eingabe vorgesehen sein, welche Scherengeometrie aus einer bestimmten vorgegebenen Anzahl an verschiedenen Scherengeometrien verwendet wird. Die unterschiedlichen Scheren weisen dabei unterschiedliche Größe beziehungsweise Aussparungen mit unterschiedlichen Größen und Formen auf. Bei bekannter Scherengeometrie kann dann beispielsweise exakt berechnet werden, bei welcher Position der Clipperscheren in Bezug zum Wurststrang beziehungsweise bei welchem Abstand der Clipperscheren zueinander eine Wurst mit bestimmtem Wurstkaliber hindurch passt. Bei fester Scherengeometrie ist natürlich keine entsprechende Eingabe notwendig; die entsprechenden Parameter sind dann in der Steuerung hinterlegt.

Als Füllparameter können beispielsweise folgende Parameter oder entsprechend äquivalente Parameter eingestellt werden: Portionsvolumen, das bedeutet, das Volumen an pastöser Masse, das während einer Portionszeit für eine Portion ausgestoßen wird, die Füllgeschwindigkeit, d. h., beispielsweise das gewünschte Volumen pro Zeit, das ausgestoßen werden soll oder die Drehgeschwindigkeit des Förderwerks für eine bestimmte Förderwerksgeometrie, d.h. Größe und Anzahl der Flügel im Förderwerksrotor. Es kann auch beispielsweise ein Prozentualwert für eine vorgegebene maximal mögliche Füllgeschwindigkeit einer Füllmaschine eingegeben werden. Ferner kann noch die Beschleunigung eingegeben werden, d. h., die Beschleunigung des Förderwerks von Null auf die eingegebene Füllgeschwindigkeit.

Somit kann die Füllmaschine aus den Vorgaben Portionsvolumen, Füllgeschwindigkeit und Beschleunigung das Bewegungsprofil für das Förderwerk ermitteln. Das Ergebnis, zum Beispiel - Portionszeit, Füllgeschwindigkeit und Rampenzeit (d. h. die Beschleunigungsdauer, die notwendig ist, damit das Förderwerk auf die Füllgeschwindigkeit beschleunigt wird und wieder auf Null gebremst wird während der Portionszeit) - kann über die Kommunikationsschnittstelle an die Clippersteuerung übertragen werden. Die Clippersteuerung kann aufgrund der nun bekannten Förderwerksbewegung die optimale Scherenbewegung und Überlagerung der Bewegungen berechnen.

Das Geschwindigkeitsprofil des Förderwerks wird in Förderzyklen wiederholt, wobei die Startzeit eines Förderwerkzyklus in Abhängigkeit der Position der Clipperscheren bestimmt wird. D. h., dass gemäß einer bevorzugten Ausführungsform die Steuereinrichtung, insbesondere die zweite Steuerung ein Startsignal an das Förderwerk sendet.

Wenn der Abstand der Clipperscheren zueinander ausreichend groß ist, so dass ein erzeugtes Wurstkaliber durch die Öffnung der Clipperscheren passt, sendet die Steuereinrichtung, insbesondere die zweite Steuerung, frühestens ein Startsignal an das Förderwerk

Das erzeugte Wurstkaliber entspricht im Mittelbereich der Wurstportion dem eingestellten Wurstkaliber bzw. dem eingegebenen Wurstkaliber. In den Endbereichen an den Wurstkuppen weist jedoch die Wurstportion einen etwas kleineren Durchmesser auf. Das Startsignal kann also erzeugt werden, wenn als erzeugtes Wurstkaliber das vorbestimmte, eingegebene-Wurstkaliber durch die Öffnung der Clippscheren passt. Das Förderwerk kann jedoch auch schon früher gestartet werden, wenn nämlich das erzeugte Wurstkaliber, das im Anfangsbereich einen kleineren Durchmesser aufweist, durch die Öffnung zwischen den Scheren passt. Dann kann die Steuereinrichtung bereits ein Startsignal erzeugen, wenn die Clipperscheren einen Abstand zueinander aufweisen, der dem erzeugten Wurstkaliber im Anfangsbereich der Wurstportion entspricht. Somit kann das Förderwerk auch schon etwas früher gestartet werden.

Somit können die Füll- und Clipmaschine optimal synchronisiert werden, was insbesondere auch bei hohem Portioniertakt und kleinen Portionsvolumen von Vorteil ist, da stets sichergestellt ist, dass die Portion durch die Scheren nicht undefiniert gebremst wird und der Füllausstoß beim Start nicht gegen geschlossene Scheren fährt.

Grundsätzlich können die Parameter für die Clipmaschine an einem Bedienfeld der Clipmaschine eingegeben werden und die Füllmaschinenparameter am Bedienfeld der Füllmaschine. Besonders vorteilhaft ist es jedoch, wenn sowohl die Parameter für die Clipmaschine als auch die Parameter für die Füllmaschine an einem Bedienfeld der Clipmaschine eingegeben werden können, da ein gemeinsames Bedienfeld für Clipmaschine und Füllmaschine die Arbeit für den Bediener vereinfacht, der sich während des Herstellungsprozesses im Bereich der Clipmaschine aufhält. Entsprechendes ist aufgrund der Kommunikationsschnittstelle möglich.

Bevorzugterweise gibt das Geschwindigkeitsprofil des Förderwerks seine Geschwindigkeit in Abhängigkeit der Zeit an, wobei in einer Portionszeit t_{Portion} in einem ersten Rampenabschnitt während einer ersten Rampenzeit t_{Auf} die Geschwindigkeit von einer minimalen Füllgeschwindigkeit Vₘᵢₙ auf eine maximale Füllgeschwindigkeit V_{Füll} ansteigt und für eine Füllzeit t_{Fülll} auf dem hohen Niveau gehalten wird und in einem zweiten Rampenabschnitt während einer zweiten Rampenzeit t_{Ab} wieder auf Vₘᵢₙ abgesenkt wird, wobei vorzugsweise Vₘᵢₙ = 0. Der Portionszeit folgt eine Portionspause, wobei während des Zeitabschnitts t_{Pause} die Füllgeschwindigkeit Vₘᵢₙ entspricht und vorzugsweise 0 ist, derart dass kein Portionsausstoß erfolgt. Vorteilhafterweise wird während der Portionszeit T_{Portion} die Geschwindigkeit der Clipperscheren 4a, b auf eine Durchlaufgeschwindigkeit V_{Durchlauf} abgesenkt und dann wieder angehoben, wobei V_{Durchlauf} ≠0.

Dass die Durchlaufgeschwindigkeit Durchlauf nicht 0 wird, ist besonders vorteilhaft für den Antrieb der Clipperscheren, da dieser schwergängig und träge ist, sodass eine Unterbrechung und ein erneutes Anlaufen des Antriebs verhindert werden kann. Besonders gut geeignet ist diese Ausführungsform für kleine Portionen beispielsweise von 1 bis 30 cm³.

Bei größeren Wurstportionen, beispielsweise in einem Bereich ab 30 cm³, kann auch während der Portionierzeit t_{Portion} die Geschwindigkeit der Clipperscheren während eines ersten Zeitabschnitts (t_{Clipstopp}) auf Null abgesenkt werden und während einer bestimmten Zeitspanne t_{Clippause} auf Null gehalten werden und dann während eines zweiten Zeitabschnitts t_{Anstieg} wieder erhöht werden. Dies kann bei sehr langen Portionszeiten notwendig werden. Um ein Stoppen der Clipperscheren auch bei längeren, beziehungsweise größeren Portionen zu verhindern, kann der Geschwindigkeitsverlauf der Clipperscheren derart gewählt werden, dass durch lange Rampenabschnitte die abgesenkte Geschwindigkeit V_{Durchlauf} ≠ 0 ist, während gleichzeitig sichergestellt ist, dass bei Portionszeitende, nach der zweiten Rampenzeit t_{Ab} des Geschwindigkeitsprofils des Förderwerks die Scheren wieder eine Position zueinander aufweisen, sodass das erzeugte Wurstkaliber hindurchpasst.

Das Bewegungsprofil der Clipscheren stellt das Ausmaß der Bewegung der Clipscheren in Abhängigkeit der Zeit dar, d. h. den Verlauf der Bewegung der Scheren in Richtung Wurststrang von einer maximalen überlagerten Position bis zu einem maximalen Abstand der Clipperscheren. Während einer Portionszeit t_{Portion} des Förderwerks bewegen sich die Clipperscheren auseinander bis zu einem maximalen Abstand voneinander, wonach sie sich wieder aufeinander zubewegen, wobei die Scheren während der Portionszeit t_{Portion} des Förderwerks einen Abstand zueinander aufweisen derart, dass das erzeugte Wurstkaliber durch die Öffnung zwischen den Scheren passt. Somit ist stets gewährleistet, dass während der Portionszeit das ausgestoßene Füllgut nicht durch die Clipperscheren gebremst wird.

Während der Portionspause des Förderwerks bewegen sich die Clipperscheren soweit aufeinander zu, dass der Wurststrang abgeteilt wird, wonach zwischen den Clipperscheren der Clip oder Doppelclip gesetzt wird und wonach sich die Scheren wieder auseinander bewegen, wobei die Scheren zu Beginn der folgenden Portionszeit einen Abstand zueinander aufweisen derart, dass das vorbestimmte Wurstkaliber durch die Öffnung zwischen den Scheren passt. Vor Setzen des Clips werden vorzugsweise die beiden Clipperscheren in Transportrichtung betrachtet relativ zueinander auseinander bewegt derart, dass die Abteilstelle gespreizt wird, damit der Clip gesetzt werden kann. Es ist möglich, dann an dieser Stelle die Wurstportion zu trennen. Die Schritte Spreizen, Clippen, Trennen sind unabhängig von dem Geschwindigkeitsprofil des Förderwerks.

Die erfindungsgemäße Vorrichtung zum Durchführen des Verfahrens weist eine Füllmaschine und eine Clipmaschine auf sowie eine Kommunikationsschnittstelle zwischen Füllmaschine und Clipmaschine zum Austausch von Prozessdaten sowie mindestens eine Steuereinrichtung, die Funktionen der Clipmaschine, insbesondere das Bewegungsprofil der gegenüberliegenden Clipperscheren und Funktionen der Füllmaschine, insbesondere das Geschwindigkeitsprofil eines Förderwerks zueinander passend automatisch einstellt. Gegenüberliegend bedeutet hier auf gebenüberliegenden Seiten des Wurststrangs. Die Steuereinrichtung kann derart ausgelegt sein, dass sie eine erste Steuerung umfasst, die in Abhängigkeit von eingegebenen Füllparametern das Geschwindigkeitsprofil des Förderwerks erstellt sowie eine zweite Steuerung, die in Abhängigkeit von eingegebenen Clipperparametern und dem Geschwindigkeitsprofil des Förderwerks ein Bewegungsprofil für die Clipperscheren bestimmt. Auch das Geschwindigkeitsprofil der Clipperscheren wird passend eingestellt.

Die Geschwindigkeit und Bewegung der Clipperscheren während des Spreizens, Clippens und Trennens ist unabhängig von dem Füllprofil, wobei die Geschwindigkeit der Clipperscheren senkrecht zum Wurststrang vorzugsweise Null oder aber sehr klein ist.

Gemäß der vorliegenden Erfindung ist die Steuereinrichtung, insbesondere Clipersteuerung, derart ausgelegt, dass die Startzeit eines Förderwerkzyklus in Abhängigkeit der Position der Clipperscheren bestimmt wird und ein Startsignal frühestens an das Förderwerk gesendet wird, wenn der Abstand der Clipperscheren ausreichend groß ist, damit ein erzeugtes Wurstkaliber durch die Öffnung der Clipperscheren passt. Somit kann der Startzeitpunkt des Bewegungsprofils der Clipperscheren zum Startzeitpunkt des Geschwindigkeitsprofils des Füllers ideal abgeglichen werden.

Die Erfindung wird nachfolgend unter Bezugnahme folgender Figuren näher erläutert.
- Figur 1: zeigt grob schematisch eine Fülllinie gemäß einer Ausführungsform der vorliegenden Erfindung.
- Figur 2: zeigt grob schematisch einen möglichen Antrieb für die Clipperscheren.
- Figur 3: zeigt grob schematisch eine weitere Ausführungsform für einen Antrieb der Clipperscheren.
- Figur 4: zeigt ein Geschwindigkeitsprofil eines Förderwerks sowie ein Geschwindigkeitsprofil der Clipperscheren.
- Figur 5: zeigt untereinander angeordnet ein Geschwindigkeitsprofil des Förderwerks, ein Bewegungsprofil der Clipperschere sowie die Clipperscherengeschwindigkeit in Abhängigkeit der Zeit.
- Figur 6: zeigt einen Drehwinkel des Antriebs in Abhängigkeit eines bestimmten Kalibers einer Portion.
- Figur 7a: zeigt grob schematisch zwei Clipperscheren in maximal geöffneter Position.
- Figur 7b: zeigt grob schematisch zwei Clipperscheren in einer Position, in der vorbestimmte Wurstportion gerade durch die Öffnung zwischen den Clipperscheren passt.
- Figur 7c: zeigt grob schematisch eine Position von zwei Clipperscheren in einer Abteilposition.
- Fig. 8: zeigt grob schematisch eine erzeugte Wurstportion.
- Fig. 9: zeigt das in Fig. 6 gezeigte Diagramm gemäß einem weiteren Ausführungsbeispiel.
- Figur 10: zeigt grob schematisch ein Ablaufdiagramm gemäß einer erfindungsgemäßen Ausführungsform.

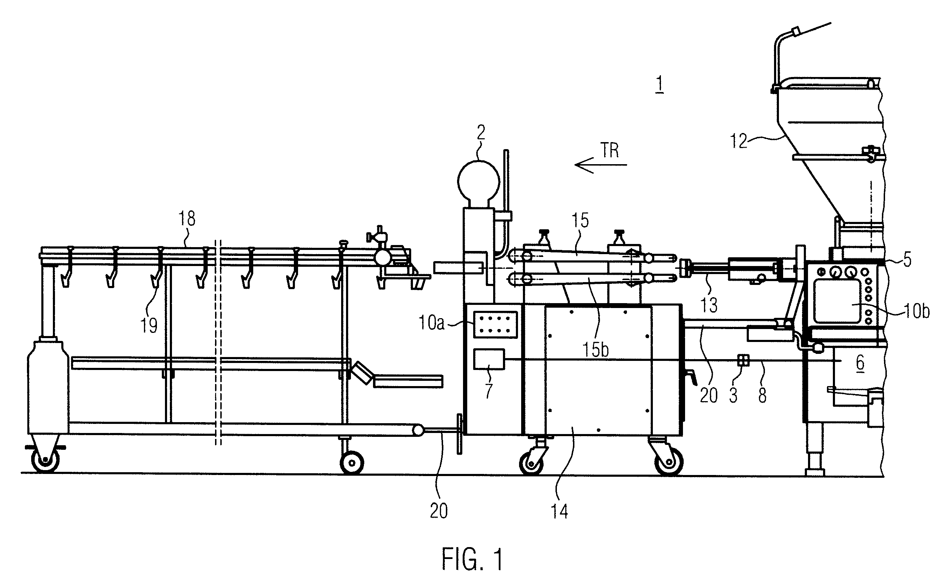

Figur 1 zeigt in schematischer Darstellung eine Füllmaschine 1 mit einer Clipmaschine 2. Die Füllmaschine 1 weist in bekannter Weise einen Trichter 12 auf, in dem beispielsweise pastöse Masse, wie Wurstbrät über ein darunter liegendes Förderwerk 5, beispielsweise in Form einer Flügelzellenpumpe durch ein Füllrohr 13 in eine Wursthülle ausgestoßen wird. Der Füllmaschine 1 ist beispielsweise eine Transporteinrichtung in Transportrichtung T_{R} nachgeschaltet, die zwei umlaufende Förderbänder 15a, 15b aufweist, zwischen denen der gefüllte Wurststrang transportiert wird. Hier ist in Transportrichtung T_{R} nach der Transporteinrichtung eine Clipmaschine angeordnet. Die Clipmaschine könnte jedoch auch in Transportrichtung vor der Transporteinrichtung mit den Förderbändern 15a, b angeordnet sein. In Transportrichtung T_{R} ist schließlich bei diesem speziellen Beispiel ein Hänger 18 angeordnet, der an seinen Hacken 19 einzelne Würste oder Wurstportionen aufnehmen und weiter transportieren kann.

Der in Figur 1 gezeigte Aufbau ist nur ein Beispiel. Vorzugsweise ist die Clippvorrichtung direkt nach dem Füllrohr 13 angeordnet ohne vorgeschaltete Transporteinrichtung 15. Ebenfalls ist es möglich, keine Aufhängeinrichtung 18 vorzusehen, sondern statt dessen die Wurstportionen direkt auf einem Tisch zu produzieren.

Einzelne Geräte der Fülllinie können mit mechanischen Verbindern 20 miteinander verbunden werden.

Die Clipmaschine 2 dient zum Setzen eines Clips beziehungsweise eines Doppelclips zwischen zwei nachfolgenden Wurstportionen. Clipmaschinen sind bereits aus dem Stand der Technik bekannt, sodass auf eine detaillierte Beschreibung der Clipmaschine 2 hier verzichtet wird. Zur Übertragung von Daten ist gemäß der vorliegenden Erfindung eine Kommunikationsschnittstelle 3 zwischen der Clipmaschine 2 und der Füllmaschine 1, beziehungsweise zwischen der Steuerung 7 der Clipmaschine 2 und der Füllmaschine 1 vorgesehen. Zur Datenübertragung ist hier ein Kabel 8 vorgesehen, das beispielsweise einen Stecker als Schnittstelle 3 aufweist. Entsprechende Daten können jedoch auch über Funk, (z. B. WLAN etc.) übertragen werden. Somit können Informationen über die Schnittstelle 3, insbesondere über eine Buskommunikation zwischen Clipmaschine 2 und Füllmaschine 1 ausgetauscht werden.

Hier weisen die Clipmaschine 2 und die Füllmaschine 1 jeweils eine eigene Steuerung 7,6 in der jeweiligen Maschine auf. Es ist jedoch auch möglich, dass die beiden Steuerungen in einer Steuereinheit, beispielsweise in der Füllmaschine, zusammengefasst sind.

Die Clipmaschine weist ein Bedienfeld 10a auf, über das Prozessparameter, die die Clipmaschine betreffen, eingegeben werden können. Gemäß der bevorzugten Ausführungsform ist es jedoch von Vorteil, wenn das Bedienfeld 10a derart ausgebildet ist, dass auch Parameter bezüglich der Füllmaschine 1 ( und gegebenenfalls auch weiterer Geräte der Fülllinie) eingegeben werden können. Dies ist besonders vorteilhaft, da sich der Bediener im Bereich des Clippers 2 bewegt und dann gleichzeitig an einer zentralen Eingabeeinheit alle Parameter für den Prozess eingeben kann. Dies ist deshalb möglich, da es eine Kommunikationsschnittstelle 3 zur Steuerung 6 der Füllmaschine 1 gibt. Aber auch die Füllmaschine 1 kann zusätzlich oder alternativ ein entsprechendes Bedienfeld 10b aufweisen, in das die Parameter für die Füllmaschine 1 und/oder die Parameter für die Clipmaschine 2 ( und gegebenenfalls für weitere Geräte) eingegeben werden können.

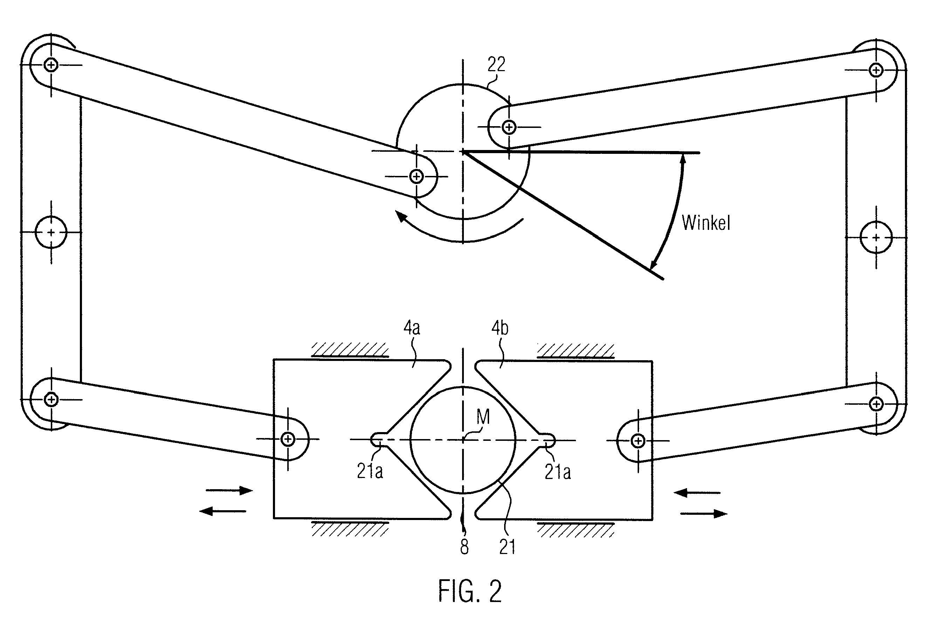

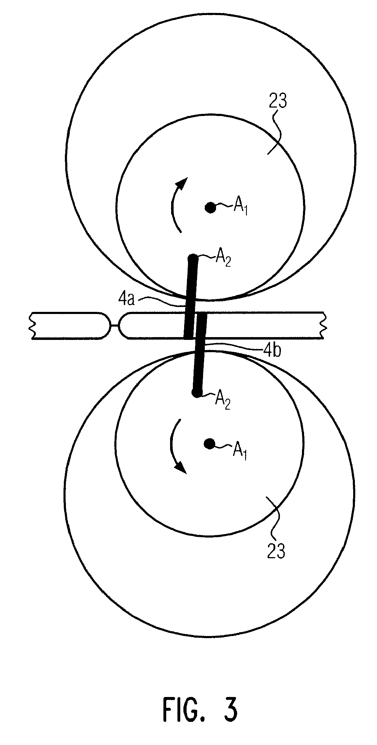

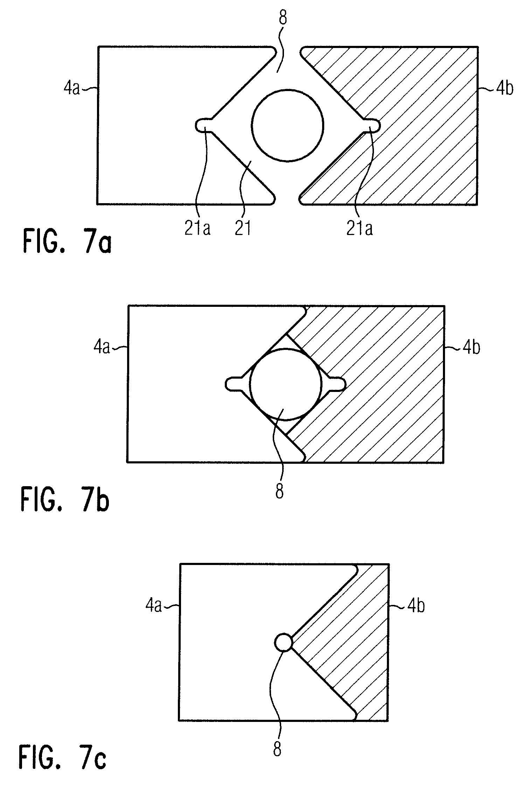

Die Clipmaschine weist, wie insbesondere aus Figuren 2 und 7 hervorgeht, zwei Clipperscheren 4a, b auf, die, wie durch die Pfeile in Figur 2 dargestellt ist, in Richtung Mittelachse M des Wurststrangs bzw. der Vorrichtung auf den Wurststrang zu und von diesem wegbewegt werden können. In bekannter Weise weisen die Clipperscheren 4a, b jeweils eine sich zur gegenüberliegenden Clipperschere hin erweiternde Aussparung 21 auf. Aussparung 21 endet in einer schmalen Aussparung 21 a. Für die Bewegung der Clipperscheren 4a, b können unterschiedliche Antriebe vorgesehen sein. In Figur 2 ist ein rotierender Antrieb 22 vorgesehen, wobei die Drehbewegung des Antriebs 22, wie schematisch dargestellt, über einen Bewegungsmechanismus in eine lineare Hin- und Herbewegung umgesetzt wird. Grundsätzlich sind aber auch Linearantriebe etc. möglich. Eine Umdrehung des Antriebs 22 um 360° stellt dabei einen kompletten Bewegungszyklus einer Clipperschere 4a, b von einem maximalen Hub zu einem minimalen Hub und zurück dar. Alternativ dazu kann auch ein in Figur 3 gezeigter Antrieb verwendet werden, bei dem die Clipperscheren 4a, b um Achsen A2 drehbar auf einem Teller 23 gelagert sind, der sich wiederum um die Achsen A1 dreht. Durch Drehen des Tellers 23 um die Achse A1 können die Clipperscheren in den Wurststrang hinein und wieder hinaus bewegt werden. Durch eine Drehung beziehungsweise einen Antrieb um die Achsen A2 können die Clipperscheren exakt zueinander ausgerichtet werden.

Der Clippermechanismus zum Setzen des Clips ist einfachheitshalber in den Figuren 2 und 3 nicht dargestellt. Auch der Mechanismus zum Spreizen einer Abteilstelle, d. h. zum Bewegen der Clipperscheren 4a, b in Transportrichtung relativ zueinander ist einfachheitshalber nicht dargestellt und wird als bekannt vorausgesetzt.

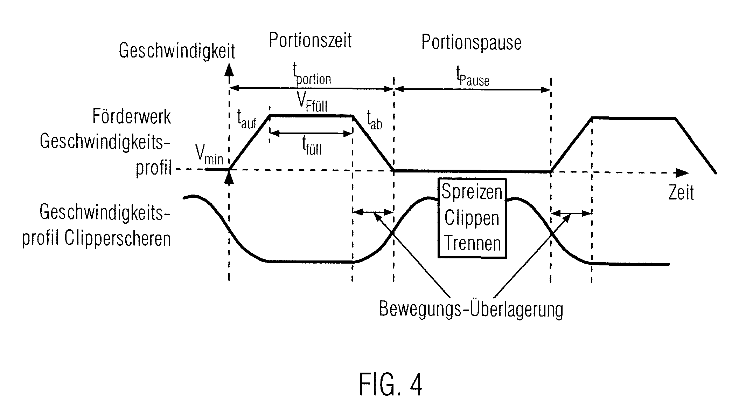

Im Betrieb der in Figur 1 gezeigten Fülllinie müssen Funktionen der Füllmaschine 1 mit den Funktionen der Clipmaschine 2 automatisch zeitlich abgestimmt werden. Bei der Wurstherstellung mit der Clipmaschine 2 laufen folgende Arbeitsschritte ab, wie auch aus der Figur 4 hervorgeht.
1. Füllmaschine: Stößt während der Portionszeit t_{Portion} eine Portion aus und stoppt nach dem eingestellten Volumen und steht während der Portionspause t_{Pause} still.
2. Clipmaschine: Die Verdrängerscheren 4a, b schließen während der Portionspause → Füllgut wird verdrängt.
3. Clipmaschine: Abteilstelle Spreizen, die Verdrängerscheren bewegen sich in Transportrichtung betrachtet auseinander.
4. Clipmaschine: Portion mit Clip verschließen.
5. Clipmaschine: Verdrängerscheren 4a, b öffnen sich wieder.

Diese Schritte werden zyklisch wiederholt.

Wie aus Figur 4 hervorgeht, gibt es eine Bewegungsüberlagerung der Bewegung der Clipperscheren und des Förderwerks. Deswegen müssen die Übergänge von Schritt 1 nach Schritt 2 sowie von Schritt 5 nach Schritt 1 aufeinander abgestimmt und optimiert werden.

Gemäß der vorliegenden Erfindung ist es nun nicht mehr notwendig, die Maschinen manuell einzustellen und deren Funktionen aneinander anzupassen.

Durch den Informationsaustausch über die Kommunikationsschnittstelle 3 entfällt das manuelle Justieren der Clip- und Füllmaschine. Auch bei Änderung der Füllgeschwindigkeit oder anderer Parameter kann eine automatische Nachberechnung der Bewegungsprofile und Überlagerungen erfolgen.

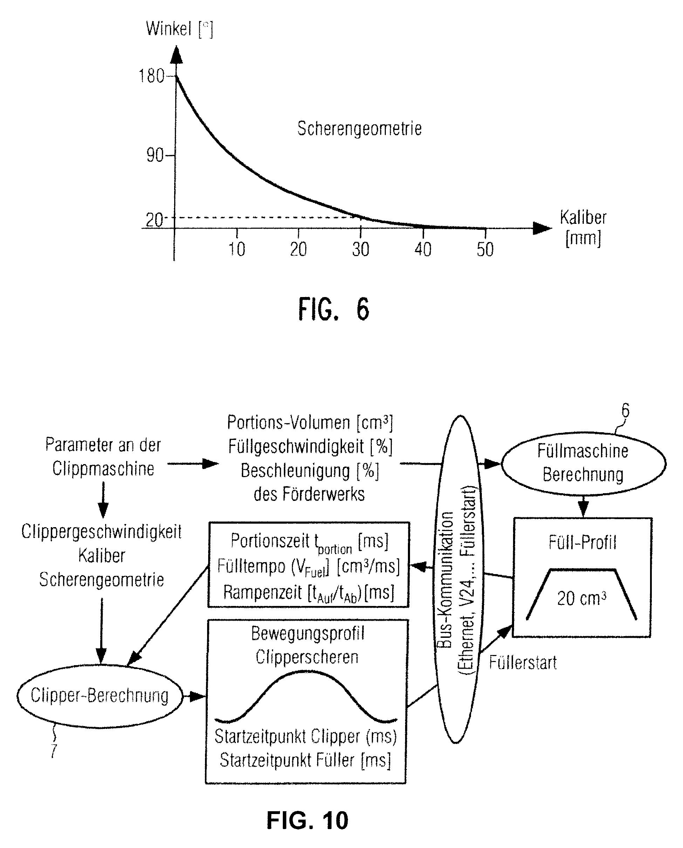

Dies funktioniert gemäß einem bevorzugten Ausführungsbeispiel z.B. wie folgt:
Wie insbesondere aus der Figur 10 hervorgeht, werden vor dem Betrieb der Maschine Parameter für die Clipmaschine und Parameter für die Füllmaschine 1 eingegeben. Dies kann beispielsweise über das in Figur 1 gezeigte Bedienfeld 10a erfolgen. Für die Füllmaschine können als Parameter beispielsweise das gewünschte Portionsvolumen [cm³] eingegeben werden. Darüber hinaus kann die gewünschte Füllgeschwindigkeit des Förderwerks 5 eingegeben werden. Die Füllgeschwindigkeit kann dabei beispielsweise in Prozent angegeben werden, wobei 100% einer maximalen Geschwindigkeit des entsprechenden Maschinentyps entspricht. Auch die Beschleunigung des Förderwerks von Null auf die gewünschte Füllgeschwindigkeit kann eingegeben werden. Auch hier kann die Eingabe als prozentuale Angabe einer maximal möglichen Beschleunigung für den Maschinentyp erfolgen. Die Parameter Füllgeschwindigkeit und Beschleunigung werden vom Anwender in Abhängigkeit des verwendeten Füllguts gewählt, sowie in Abhängigkeit der Wursthülle. Die eingegebenen Parameter werden dann, wie in Figur 10 dargestellt, über eine Kommunikationsschnittstelle an die Füllmaschinensteuerung 6 geleitet. Erfolgt die Eingabe alternativ am Bedienfeld 10b, ist selbstverständlich keine Parameterübertragung zwischen Clipmaschine 2 und Füllmaschine 1 notwendig. Die Steuerung 6 berechnet aus diesen Parametern oder gegebenenfalls äquivalenten Parametern ein Füllprofil beziehungsweise ein Geschwindigkeitsprofil für das Förderwerk 5. Das Geschwindigkeitsprofil des Forderwerks 5 gibt eine Geschwindigkeit in Abhängigkeit der Zeit an, wobei wie insbesondere auch aus Figur 4 hervorgeht, in einer Portionszeit die Portion in einem ersten Rampenabschnitt während einer ersten Rampenzeit t_{Auf} von einer minimalen Füllgeschwindigkeit Vₘᵢₙ auf eine maximale Füllgeschwindigkeit V_{Füll} ansteigt und für eine Füllzeit t_{Füll} auf hohem Niveau gehalten wird und in einem zweiten Rampenabschnitt während einer zweiten Rampenzeit t_{Ab} wieder auf Vₘᵢₙ abgesenkt wird, wobei Vₘᵢₙ hier Null ist. Wäre Vₘᵢₙ ≠ 0, d.h. dass das Förderwerk mit minimaler Geschwindigkeit weiter laufen würde, so würde das Startsignal, das von der Steuereinrichtung erzeugt wird, veranlassen, dass das Förderwerk von dieser Geschwindigkeit aus auf Maximalfüllgeschwindigkeit beschleunigt, wie insbesondere beispielsweise aus Fig. 4 (t_{Auf}) hervorgeht.

Das Ergebnis dieses Profils ist also die Portionszeit t_{Portion} [ms], Füllgeschwindigkeit (V_{Füll}) [cm³/ms], d. h. die Geschwindigkeit des Förderwerks, die maximal erreicht wird, sowie die Rampenzeiten t_{Auf}/t_{Ab} [ms].Das Füllprofil wird durch in der Steuerung gespeicherte Funktionen berechnet. Diese Daten werden beispielsweise über die Kommunikationsschnittstelle wieder an die Steuerung 7 der Clipmaschine geschickt. Sind die Steuerungen 6 und 7 in einer Steuereinheit integriert, so wird diese Information von einem Steuerabschnitt zum anderen Steuerabschnitt weitergeleitet.

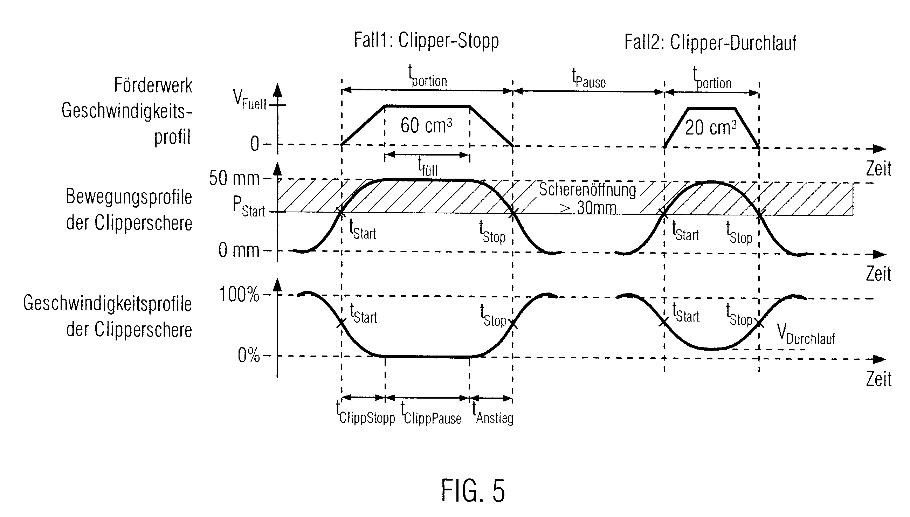

Auch Parameter, die die Clipmaschine 2 betreffen, werden beispielsweise am Bedienfeld 10a oder aber am Bedienfeld 10b eingegeben. Bei diesem Ausführungsbeispiel werden die Parameter am Bedienfeld 10a eingegeben. Für die Clipmaschine wird die Clipperscherengeschwindigkeit eingegeben, die die Clipperscheren maximal aufweisen. Dabei kann sich die Eingabe beispielsweise auf die Drehzahl eines Antriebs beziehen, oder aber je nach Beschaffenheit des Clippers auf die tatsächliche Geschwindigkeit der Clipperscheren senkrecht zur Mittelachse des Wurststrangs beziehungsweise senkrecht zur Transportrichtung. Ferner wird das Wurstkaliber, d. h. der Durchmesser der zur erzeugenden Portion, eingegeben. Ferner wird eingegeben, welche Art an Clipperschere 4a, d. h. welche Scherengeometrie verwendet wird. Dazu sieht die Eingabe mehrere Auswahlmöglichkeiten vor, die bestimmten vorgegebenen Scherentypen entsprechen. Sind die Scheren nicht veränderbar bzw. ist ein Austausch nicht vorgesehen, muss keine Scherengeometrie eingegeben werden. Die verwendete Scherengeometrie ist dann bekannt und für weitere Berechnungen abgespeichert. In Abhängigkeit dieser eingegebenen Parameter sowie des Geschwindigkeitsprofils des Förderwerks berechnet die Clippersteuerung 7 das Bewegungsprofil für die Clipperscheren 4a, b, wie in Figur 5 dargestellt ist und nachfolgend noch näher erläutert wird. Darüber hinaus berechnet die Steuerung 7 auch die entsprechenden Geschwindigkeiten beziehungsweise das Geschwindigkeitsprofil für die Clipperscheren 4a, b wie z.B. in Fig. 5 dargestellt ist. Die Steuerung 7 berechnet auch den Startzeitpunkt des Geschwindigkeitsprofils des Förderwerks (t start) in Abhängigkeit des Startzeitpunkts des Bewegungsprofils der Clipperscheren, wie nachfolgend noch näher erläutert wird. Die Steuerung 7 sendet dann ein Signal für den Start des Förderwerkgeschwindigkeitsprofils an den Vakuumfüller 1, wie durch den Pfeil in Figur 7 deutlich wird.

Wie aus Figur 4 und Figur 5 hervorgeht, bewegen sich während der Portionszeit t_{Portion} des Förderwerks 5 die Clipperscheren 4a, b auseinander bis zu einem maximalen Abstand voneinander, d. h. bei einem rotierenden Antrieb eine Drehbewegung bis 180°. Bei diesem konkreten Ausführungsbeispiel beträgt die maximale Linearbewegung senkrecht zur Mittelachse M des Wurststrangs bei einer Drehung von 180°des Antriebs 50 mm (maximaler Hub).

Im Fall 1 der Fig. 5 verweilen die Clipperscheren während der Zeit t_{Clippause} in dieser Position und bewegen sich während der Portionszeit wieder aufeinander zu. Die Scherenöffnung 8 wird während der Portionszeit so eingestellt, dass die Scheren während der Portionszeit t_{Portion} in einer Position sind, so dass sie einen Abstand zueinander aufweisen derart, dass das vorbestimmte Wurstkaliber durch die Öffnung zwischen den Scheren passt. In dem konkreten Ausführungsbeispiel ist die Scherenöffnung hier größer 30 mm. D. h., wenn sich, wie in dem Bewegungsprofil der Clipperscheren in Figur 5 zu entnehmen ist, die Clipperscheren 4a, b auseinander bewegen, so weisen sie an einem Punkt t_{Start} einen Abstand zueinander auf, der ausreicht, damit die vorbestimmte Portion durch die Öffnung 8 hindurch passt, was insbesondere aus den Figuren 7a und 7b hervorgeht. Dieser Zeitpunkt kann bei bekannter Scherengeometrie einfach ermittelt werden. In Figur 6 ist als Beispiel der Drehwinkel des Antriebs von 0 bis 180° aufgetragen, wobei die 0°-Position dem maximalen Hub, beziehungsweise einem maximalen Abstand einer Clipperschere von der gegenüberliegenden Schere entspricht. Für eine bestimmte Geometrie der Scheren gibt es entsprechende Kurven, die anzeigen, in welcher Position die Clipperscheren 4a, b angeordnet sein müssen, beziehungsweise welchen Abstand sie aufweisen müssen, damit ein bestimmtes Kaliber hindurchpasst. Bei dem konkreten Ausführungsbeispiel ist das vorbestimmte Kaliber 30 mm wobei sich ein Winkel von 20° ergibt. Das bedeutet, dass sich bei einem Drehwinkel des Antriebs ab 20° abwärts (bzw. 340°je nach Drehrichtung) , die Clipperscheren 4a und 4b jeweils in einer Position befinden, in der die Wurstportion durch die Scheren passt. Die in Figur 6 gezeigte Abhängigkeit des Drehwinkels vom Kaliber kann experimentell ermittelt werden, oder aber auch berechnet werden und für verschiedene Scherengeometrien in der Steuerung abgelegt werden. Das bedeutet, dass für einen Zeitpunkt t_{Start} die Steuerung 7 ermittelt, dass die Portionszeit beginnen kann und ein Signal von der Steuerung 7 zur Füllmaschinensteuerung 6 geschickt wird. Am Ende der Portionszeit t_{Portion} wird das Bewegungsprofil der Clipperschere derart eingestellt, dass sie wieder genau den Abstand zueinander haben wie bei t_{Start}, derart, dass die Wurstportion mit vorbestimmten Kaliber noch durchpasst.

Während der Portionspause bewegen sich die Scheren dann wieder aufeinander zu, wie insbesondere aus Figur 4 hervorgeht. Das bedeutet, dass der Punkt P_{Start}, der bei diesem Ausführungsbeispiel einem bestimmten Drehwinkel des Antriebs entspricht, eine Funktion des Kalibers und der Scherengeometrie ist. Aus dem eingestellten Kaliber und der in der Maschine verbauten Scheren kann also die Clipperscherenposition berechnet werden, bei der die Portion durch die Scheren passt.

Figur 5 zeigt für Fall 1 auch das Geschwindigkeitsprofil der Clipperscheren zum Zeitpunkt t_{Start}, an dem sich die Clipperscheren in einer Position P_{Start} befinden. Die Geschwindigkeit der Clipperscheren nimmt während einer Zeit t_{Clipsiopp} hier auf Null ab. Die Clipperstoppzeit ist also die Zeit von der Position P_{Start} der Clipperscheren bis zur maximalen Öffnung der Clipperscheren, d. h. hier zur 0°-Position des Drehantriebs. Die Zeitspanne t_{Clipstopp} = f (P_{Start}, Clipperscherengeschwindigkeit, Clipperscherenbeschleunigung); während der Zeit t_{Clippause} stehen die Clipperscheren still. Die Clipscherenbeschleunigung kann als fester Wert in der Steuerung der Clipmaschine hinterlegt sein oder aber als Parameter vom Bediener eingegeben werden.

Clipperpausenzeit: t_{Clippause} = t_{Portion} - 2 x t _{Clipstopp}. Die Clippausenzeit ist im Fall 1 größer Null, daher wartet der Clipper in dieser Zeit in der 0°-Position, d. h. der maximal geöffneten Position der Clipperscheren. Nach der Clippause steigt die Geschwindigkeit mit der bestimmten Clipperbeschleunigung wieder an, wobei zu einem Zeitpunkt t_{Stopp}, der dem Ende der Portionszeit entspricht, die Scheren wieder in Position t_{Start} sind.

Der Fall 1 wurde nun für den Fall einer relativ großen Portion mit 60 cm³ beschrieben, der bei einer vorgegebenen Clipperbeschleunigung ein Warten der Clipscheren erfolgt.

Der Fall 2 zeigt eine kleinere Portion von beispielsweise 20 cm³ derart, dass sich eine kürzere Zeit t_{Portion} ergibt. In diesem Fall ergibt die Formel t_{Clippause} = t_{Portion} - 2 × t_{Clipstopp} einen Wert kleiner Null. Das bedeutet, dass der Clipper im Durchlaufbetrieb mit einer Durchlaufgeschwindigkeit V_{Durchlauf} arbeitet, d. h. dass die Clipperscheren nicht still stehen. Die Durchlaufgeschwindigkeit V_{Durchlauf} = f (t_{Portion}, t_{Clipstopp}), d. h., die Durchlaufgeschwindigkeit ergibt sich durch Überlagerung der Funktionsabschnitte d.h. der Rampen in den Zeitabschnitten t_{Clipstopp} und t_{Anstieg} (t_{Clipstopp} = T_{tAnstieg}) bei vorgegebener Beschleunigung, beziehungsweise Verzögerung. Der Schnittpunkt der Funktionsabschnitte ergibt die Durchlaufgeschwindigkeit.

Die Berechnung der Clipscherengeschwindigkeit ist hier ein Beispiel. Wesentlich ist, dass t_{Start} und t_{Stopp}, am Anfang und am Ende der Portionszeit t_{Portion'} liegen und die Position der Scheren zu den Zeiten t_{Start} und t_{Stop} zumindest in einer Position ≥ P_{Start}, vorzugsweise = P_{Start} liegen.

Somit kann in Abhängigkeit des Füllprofils beziehungsweise des Geschwindigkeitsprofils des Förderwerks das Bewegungsprofil der Clipperschere während der Portionszeit eingestellt werden. Die Länge der Portionspause t_{Portion} hängt nicht von dem Füllprofil ab, sondern ist abhängig von der Drehgeschwindigkeit der Clipmaschine, der Zeit zum Spreizen der Clipperscheren, dem Clippen und Trennen. Im Bereich t_{Pause} steigt die Clippergeschwindigkeit entsprechend einer vorbestimmten Clipperbeschleunigung wieder an bis zu einer maximalen Clippergeschwindigkeit, die der eingestellten Clipperscherengeschwindigkeit entspricht, 100%, wie in Figur 5 gezeigt ist. Dann erfolgt, wie insbesondere aus Figur 4 hervorgeht, das Spreizen, Clippen und Trennen. Am Ende der Portionspause nimmt die Clipperscherengeschwindigkeit dann wieder, wie insbesondere aus Figur 4 hervorgeht, ab, derart dass sich die Clipperscheren zum Beginn t_{Start} der Portionszeit t_{Portion} wieder in der Position P_{Start} befinden.

Beim Verdrängen während der Positionspause bewegen sich, wie in Figur 7c gezeigt ist, die Clipperscheren derart weit aufeinander zu, beispielsweise bis in eine voreingestellte maximale Position, beispielsweise der 180°-Position des Antriebs. Das Füllgut wird verdrängt und die Einschnürstelle liegt in der Öffnung 8, die nun lediglich noch den überlagerten Endbereichen 21 a der Scheren entspricht. Zum Setzen des Clips werden dann die beiden Clipperscheren 4a, b in Transportrichtung TR auseinander bewegt, wodurch die Abteilstelle gespreizt wird. Hiernach erfolgt das Setzen des Clips beziehungsweise Doppelclips. Gegebenenfalls kann mit einer Schneideinrichtung die Wurstportion getrennt werden, oder die Wurstportionen bleiben zusammenhängend und können dann auf der Aufhängeinrichtung 18 aufgehängt werden.

Bei den vorherigen Ausführungsbeispielen hat die Steuereinrichtung, insbesondere die Steuerung 7, das Startsignal an das Förderwerk zu einem Zeitpunkt t_{Start} abgegeben, an dem die Clipperschwerenposition P_{Start} so war, dass der Abstand der Clipperscheren 4a,b so groß ist, dass ein vorbestimmtes eingegebenes Wurstkaliber, wie im Zusammenhang mit Fig. 6 erläutert wurde, in der entsprechenden Position der Scheren gerade durch die Clipperscheren hindurchpasst.

Es ist jedoch auch möglich, das Förderwerk 1 etwas früher zu starten.

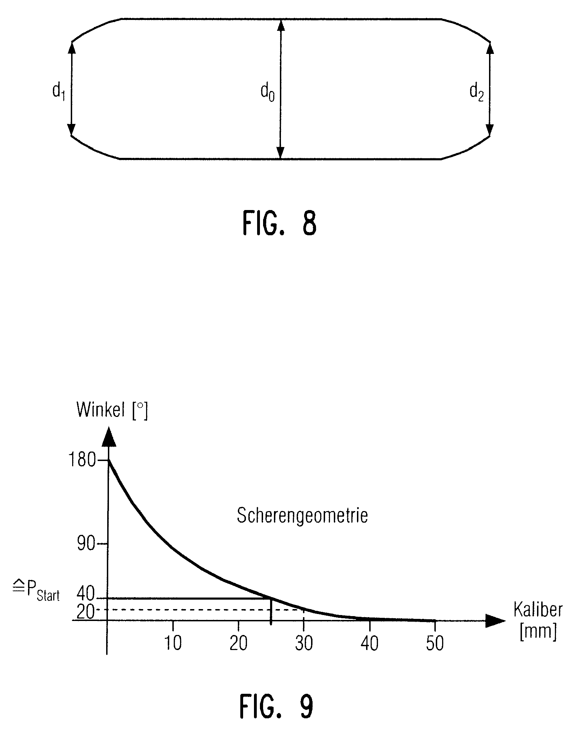

Fig. 8 zeigt grob schematisch einen erzeugten gefüllten Wurststrang während einer Portionszeit. Dabei ist zu erkennen, dass das Wurstkaliber d nicht über die gesamte Wurstportion hin konstant ist. In einem mittleren Bereich entspricht das Wurstkaliber dem eingestellten Wurstkaliber d₀. Wie in den Endbereichen werden jedoch Wurstkuppen mit kleinerem Durchmesser d₁ (am Anfang der Wurstportion) und d₂ (am Ende der Wurstportion) erzeugt. Diese Schwankung des Wurstkalibers ergibt sich dadurch, dass bei Portionsbeginn das Förderwerk erst anläuft und ergibt sich darüber hinaus in Abhängigkeit des Füllrohrdurchmessers und der Kompressibilität der ausgestoßenen pastösen Masse.

Gemäß einem weiteren Ausführungsbeispiel kann von der Steuereinrichtung, vorzugsweise der Steuerung 7, bereits ein Startsignal an das Förderwerk 5 gegeben werden, wenn die Scheren eine Position zueinander aufweisen, derart dass z.B. das erzeugte Wurstkaliber d₁ durch die Scheren passt oder ein Wurstkaliber in einem Bereich von d₁ bis d₀. Wie aus Fig. 9 hervorgeht, kann aufgrund des kleineren Durchmessers in einem Bereich zwischen d₁ und d₀ hier z.B. 25 mm statt den 30 mm, die entsprechende Position ( P start ) der Clippscheren ermittelt werden, so dass sich hier ein Drehwinkel des Antriebs von 40°statt 20°ergibt, ab dem die erzeugte Wurstportion durch die Scheren passt, so dass es zu keinem Rückstau der pastösen Masse kommt. Das Verhältnis von d₀ zu d₁ kann experimentell ermittelt werden. Da beim Clippen an der Abteilstelle die Innenmasse vollständig verdrängt wird und ein Zopf gebildet wird, kann der kleinste Durchmesser an dieser Stelle nur noch durch die zusammengefaltete Wursthülle gebildet sein. Dabei kann d₁ = 2 bis 10 % von d₀ betragen (d₁≃ d₂). Öffnen die Scheren also schon bei einem reduzierten Kaliber in einem Bereich von d, bis < d₀, so muss dann jedoch darauf geachtet werden, dass sich die Scheren ausreichend schnell auseinander bewegen derart, dass der erzeugte Wurststrang, dessen Durchmesser auf d₀ ansteigt, ständig durch das Scherenpaar hindurchpassen würde, ohne dass es zu einem Rückstau kommt. Entsprechendes gilt für die Lage der Clipperscheren P_{Start} zu einem Zeitpunkt P_{Stop}, d.h. am Ende der Portionszeit. Wesentlich ist jedoch, dass während der Portionszeit die Clipperscheren einen ausreichenden Abstand aufweisen, dass der erzeugte Wurststrang durch die Öffnung zwischen den Scheren hindurchpasst. Das Startsignal sollte also frühestens zum Zeitpunkt d, erzeugt werden. Spätestens zu einem Zeitpunkt, bei dem die Position P_{Start} der Clipperscheren derart ist, dass das eingestellte Wurstkaliber d₀ gerade hindurchpasst.

## Patentansprüche

1. Verfahren zum Steuern einer Füllmaschine (1) mit einer Clipmaschine (2), wobei
die Clipmaschine (2) und die Füllmaschine (1) über eine Kommunikationsschnittstelle (3) Prozessdaten austauschen derart, dass
das Bewegungsprofil von gegenüberliegenden Clipperscheren (4a,b) und
das Geschwindigkeitsprofil eines Förderwerks (5)
von einer Steuereinrichtung (6, 7) automatisch zueinander passend eingestellt werden, wobei das Geschwindigkeitsprofil des Förderwerks (1) in Förderwerkzyklen periodisch wiederholt wird, und die Startzeit (tₛₜₐᵣₜ)eines Förderwerkzyklus in Abhängigkeit der Position von Clipperscheren (4a,b) bestimmt wird und die Steuereinrichtung ein entsprechendes Startsignal an das Förderwerk (5) sendet und
wobei die Steuereinrichtung frühestens ein Startsignal an das Förderwerk (5) sendet, wenn ein Abstand der Clipperscheren (4a,b) zueinander ausreichend groß ist, dass ein erzeugtes Wurstkaliber (d0, d1) durch die Öffnung (8) der Clipperscheren (4a,b) passt.

2. Verfahren nach Anspruch 1, **dadurch gekennzeichnet, dass**
Clipperparameter für die Funktion der Clipmaschinen (2) eingegeben werden, Füllparameter für die Funktion des Förderwerks (5) der Füllmaschine (1) eingegeben werden,
eine erste Steuerung (5) der Steuereinrichtung in Abhängigkeit der Füllparameter das Geschwindigkeitsprofil des Förderwerks (5) erstellt,
eine zweite Steuerung (7) der Steuereinrichtung in Abhängigkeit der Clipperparameter und des Geschwindigkeitsprofils des Förderwerks (5) ein Bewegungsprofil für die Clipperscheren (4a,b) bestimmt.

3. Verfahren nach Anspruch 2, **dadurch gekennzeichnet, dass** als Clipperparameter zumindest folgende Parameter eingestellt werden:
Wurstkaliber, Clipperscherengeschwindigkeit, vorzugsweise zusätzlich Clipperscherengeometrie und
vorzugsweise zusätzlich Clipperscherenbeschleunigung.

4. Verfahren nach Anspruch 2 oder 3, **dadurch gekennzeichnet, dass** als Füllparameter mindestens folgende eingestellt werden:
Portionsvolumen , Füllgeschwindigkeit , Beschleunigung des Förderwerks auf die Füllgeschwindigkeit.

5. Verfahren nach mindestens einem der Ansprüche 1 bis 4, **dadurch gekennzeichnet, dass** für das Geschwindigkeitsprofil des Förderwerks (5) folgende Größen ermittelt werden: Portionszeit, in der das Förderwerk Füllgut ausstößt, das Füllgeschwindigkeit (V_{Füll}), sowie die Rampenzeiten (t_{AUf}/t_{Ab}) in der das Förderwerk auf die Füllgeschwindigkeit (V_{Füll}) beschleunigt wird und die Füllgeschwindigkeit (V_{Füll}) wieder abnimmt.

6. Verfahren nach mindestens einem der Ansprüche 1 bis 5, **dadurch gekennzeichnet, dass** die Parameter für die Clipmaschine und die Parameter für die Füllmaschine an einem Bedienfeld (10a) an der Clippermaschine eingestellt werden.

7. Verfahren nach mindestens einem der Ansprüche 1 bis 6, **dadurch gekennzeichnet, dass** die erste und zweite Steuerung (7,8) in einer gemeinsamen Steuereinrichtung (7,8) zusammengefasst sind.

8. Verfahren nach mindestens einem der vorhergehenden Ansprüche, **dadurch gekennzeichnet, dass** das Geschwindigkeitsprofil des Förderwerks (5) eine Geschwindigkeit in Abhängigkeit der Zeit angibt, wobei
in einer Portionszeit t_{Portion} in einem ersten Rampenabschnitt während einer ersten Rampenzeit t_{Auf} die Geschwindigkeit von einer minimalen Füllgeschwindigkeit Vₘᵢₙ auf eine maximale Füllgeschwindigkeit V_{Füll} ansteigt und für eine Füllzeit t_{Füll} auf dem hohen Niveau gehalten wird und in einem zweiten Rampenabschnitt während einer zweiten Rampenzeit t_{Ab} wieder auf Vₘᵢₙ abgesenkt wird, wobei vorzugsweise Vₘᵢₙ = 0.
wobei während einer nachfolgenden Portionspause während eines Zeitabschnitts t_{Pause} die Füllgeschwindigkeit Vₘᵢₙ entspricht und vorzugsweise 0 ist,
wobei während der Portionszeit (t_{Portion}) die Geschwindigkeit der Clipperscheren 4a, b auf eine Durchlaufgeschwindigkeit (V_{Durchlauf}) abgesenkt wird und wieder ansteigt, wobei V_{Durchlauf} ≠ 0.

9. Verfahren nach Anspruch 8, wobei während der Portionszeit die Geschwindigkeit der Clipperscheren während eines ersten Zeitabschnitts (t_{Clipstopp}) auf 0 abgesenkt wird und während einer bestimmten Zeitspanne (t_{Clippause}) auf 0 gehalten wird und dann während eines zweiten Zeitabschnitts (t_{Anstieg}) wieder erhöht wird.

10. Verfahren nach mindestens einem der Ansprüche 8 oder 9, **dadurch gekennzeichnet, dass** das Bewegungsprofil der Clipperscheren (4a, b) das Ausmaß der Bewegung der Clipperscheren in Abhängigkeit der Zeit darstellt und
während einer Portionszeit t_{Portion} des Förderwerks (5) sich die Clipperscheren (4a, b) auseinander bewegen bis zu einem maximalen Abstand voneinander und sich dann wieder aufeinander zu bewegen, wobei die Scheren während der Portionszeit (t_{Portion}) des Förderwerks einen Abstand zueinander aufweisen derart, dass das erzeugte Wurstkaliber durch die Öffnung (8) zwischen den Scheren passt.

11. Verfahren nach mindestens einem der Ansprüche 8-10, **dadurch gekennzeichnet, dass** während der Portionspause des Förderwerks sich die Clipperscheren (4a,b) soweit aufeinander zu bewegen, dass der Wurststrang (9) abgeteilt wird, wonach zwischen den Clipperscheren (4a,b) der Clip oder Doppelclip gesetzt wird und wonach sich die Scheren wieder auseinander bewegen, wobei die Scheren zu Beginn der folgenden Portionszeit (t_{Portion}) einen Abstand zueinander aufweisen, derart, dass das erzeugte Wurstkaliber durch die Öffnung (8) zwischen den Scheren (4a, b) passt, wobei die entsprechende Position (P_{Start}) der Clipperscheren (4a, b) automatisch von der Steuerung als Funktion der Clipperscherengeometrie und des eingestellten Wurstkalibers bestimmt wird.

12. Vorrichtung zum Durchführen des Verfahrens nach mindestens einem der Ansprüche 1 bis 11 mit einer Füllmaschine (1) und mit einer Clipmaschine (2) und einer Kommunikationsschnittstelle (3) zwischen Füllmaschine (1) und Clipmaschine (3) zum Austausch von Prozessdaten sowie mindestens einer Steuereinrichtung, die das Bewegungsprofil von gegenüberliegenden Clipperscheren (4a, b) und
das Geschwindigkeitsprofil eines Förderwerks (5) zueinander passend automatisch einstellt, wobei die Steuerung derart ausgelegt ist, dass die Startzeit eines Förderwerkszyklus in Abhängigkeit der Position der Clipperscheren (4a,b) bestimmt wird und frühestens ein Startsignal an das Förderwerk (5) gesendet wird, wenn ein Abstand der Clipperscheren (4a,b) ausreichend groß ist, dass ein erzeugtes Wurstkaliber durch die Öffnung (8) der Clipperscheren passt.

13. Vorrichtung nach Anspruch 12, **dadurch gekennzeichnet, dass** die Steuereinrichtung derart ausgelegt ist, dass sie eine erste Steuerung (6) umfasst, die in Abhängigkeit von eingegebenen Füllparametern das Geschwindigkeitsprofil des Förderwerks (5) erstellt sowie eine zweite Steuerung (7), die in Abhängigkeit von eingegebenen Clipperparametern und dem Geschwindigkeitsprofil des Förderwerks (5) ein Bewegungsprofil für die Clipperscheren (4a, b) bestimmt.

## Claims

1. Method for controlling a filling machine (1) with a clipping machine (2), wherein
the clipping machine (2) and the filling machine (1) exchange process data via a communication interface (3), such that
the movement profile of opposed clipper scissors (4a, b), and
the speed profile of a feed mechanism (5),
are automatically matched by a controlling system (6, 7),
wherein the speed profile of the feed mechanism (1) is periodically repeated in feed mechanism cycles, and the starting time (t_{Start}) of a feed mechanism cycle is determined in response to the position of clipper scissors (4a, b), and the controlling system (7), sends a corresponding start signal to the feed mechanism (5), and
wherein the controlling system sends a start signal to the feed mechanism (5) at the earliest when a distance of the clipper scissors (4a, b) with respect to each other is sufficiently long for a produced sausage caliber (d0, d1) to fit through the opening (8) of the clipper scissors (4a, 4b).

2. Method according to claim 1, **characterized in that**
clipper parameters for the function of the clipping machines (2) are entered,
filling parameters for the function of the feed mechanism (5) of the filling machine are entered,
a first control system (5) of the controlling system sets up the speed profile of the feed mechanism (5) in response to the filling parameters,
a second control system (7) of the controlling system determines, in response to the clipper parameters and the speed profile of the feed mechanism (5), a movement profile for the clipper scissors (4a, b).

3. Method according to claim 2, **characterized in that** at least the following parameters are set as clipper parameters:
sausage caliber, clipper scissor speed, preferably additionally clipper scissor geometry,
and
preferably additionally clipper scissor acceleration.

4. Method according to claim 2 or 3, **characterized in that** at least the following are set as filling parameters:
portion volume, filling speed, acceleration of the feed mechanism to the filling speed.

5. Method according to at least one of claims 1 to 4, **characterized in that** for the speed profile of the feed mechanism (5), the following values or equivalent values are determined: portioning time during which the feed mechanism ejects product, filling speed (V_{Füll}), and the ramp times (t_{Auf}/t_{Ab}) during which the feed mechanism is accelerated to the filling speed (V_{Füll}) and the filling speed (V_{Füll}) decreases again.

6. Method according to at least one of claims 1 to 5, **characterized in that** the parameters for the clipping machine and the parameters for the filling machine are adjusted at an operator panel (10a) at the clipping machine.

7. Method according to at least one of claims 1 to **6, characterized in that** the first and the second control systems (7, 8) are combined in a common controlling system (7, 8).

8. Method according to at least one of the preceding claims, **characterized in that** the speed profile of the feed mechanism (5) indicates a speed in response to time, wherein
during a portioning time t_{Portion} in a first ramp section during a first ramp time t_{Auf}, the speed increases from a minimum filling speed Vₘᵢₙ to a maximum filling speed V_{Füll} and is kept on said high level for a filling time t_{Füll}, and is decreased again to Vₘᵢₙ in a second ramp section during a second ramp time t_{Ab}, where preferably Vₘᵢₙ = 0,
where during a following portioning pause during a period t_{Pause}, the filling speed corresponds to Vₘᵢₙ and is preferably 0,
where during the portioning time (t_{Portion}), the speed of the clipper scissors 4a, b is decreased to a passage speed (V_{Durchlauf}), and increases again, where V_{Durchlauf} ≠ 0.

9. Method according to claim 8, wherein during the portioning time, the speed of the clipper scissors is decreased to 0 during a first time segment (t_{Clipstopp}), and is kept at 0 during a certain period (t_{Clippause}), and is then increased again during a second time segment (t_{Anstieg}).

10. Method according to at least one ofclaims 8 or 9 , **characterized in that** the movement profile of the clipper scissors (4a, b) represents the degree of movement of the clipper scissors in response to time, and
during a portioning time t_{Portion} of the feed mechanism (5), the clipper scissors (4a, b) move apart to a maximum distance and then move towards each other again, where the scissors have, during the portioning time (t_{Portion}) of the feed mechanism, such a distance with respect to each other that the produced sausage caliber fits through the opening (8) between the scissors.

11. Method according to at least one of claims 8-10, **characterized in that** during the portioning pause of the feed mechanism, the clipper scissors (4a, b) move towards each other to such an extent that the sausage length (9) is cut through, whereupon the clip or double clip is placed between the clipper scissors (4a, b), and whereupon the scissors move apart again, where at the beginning of the following portioning time (t_{Portion}), the scissors have such a distance with respect to each other that the produced sausage caliber fits through the opening (8) between the scissors (4a, b) where the corresponding position (P_{Start}) of the clipper scissors (4a, b) is automatically determined by the control system as a function of the clipper scissor geometry and the set sausage caliber.

12. Device for performing the method according to at least one of claims 1 to 11 with a filling machine (1) and a clipping machine (2) and a communication interface (3) between the filling machine (1) and the clipping machine (3) for exchanging process data, and at least one controlling system which automatically matches the movement profile of opposed clipper scissors (4a, b,) and the speed profile of a feed mechanism (5), wherein the control system is designed such that the starting time of a feed mechanism cycle is determined in response to the position of the clipper scissors (4a, b), and a start signal is sent to the feed mechanism (5) at the earliest when a distance of the clipper scissors (4a, b) is sufficiently long for a produced sausage caliber to fit through the opening (8) of the clipper scissors.

13. Device according to claim 12, **characterized in that** the controlling system is designed such that it comprises a first control system (6) which sets up the speed profile of the feed mechanism (5) in response to entered filling parameters, and a second control system (7) which determines a movement profile for the clipper scissors (4a, b) in response to entered clipper parameters and the speed profile of the feed mechanism (5).

## Revendications

1. Procédé pour assurer la commande d'une machine de remplissage (1) comprenant une machine à clipper dite clippeuse (2), d'après lequel
la clippeuse (2) et la machine de remplissage (1) échangent des données de processus par l'intermédiaire d'une interface de communication (3), de manière à ce que
le profil de mouvement de ciseaux de clippeuse (4a,b) mutuellement opposés et
le profil de vitesse d'un groupe de refoulement (5) soient réglés automatiquement par un dispositif de commande (6, 7) de manière à être adaptés mutuellement l'un à l'autre,
procédé
d'après lequel le profil de vitesse du groupe de refoulement (1) est répété périodiquement en cycles de groupe de refoulement, et l'instant de démarrage (tₛₜₐᵣₜ) d'un cycle de groupe de refoulement est déterminé en fonction de la position de ciseaux de clippeuse (4a,b), et le dispositif de commande envoie un signal de démarrage correspondant au groupe de refoulement (5), et d'après lequel le dispositif de commande envoie un signal de démarrage au groupe de refoulement (5) au plus tôt lorsqu'une distance d'espacement des ciseaux de clippeuse (4a,b) est suffisamment grande pour qu'un calibre de saucisse (d0, d1) produit, soit apte à passer dans l'ouverture (8) des ciseaux de clippeuse (4a,b).

2. Procédé selon la revendication 1, **caractérisé en ce que**
des paramètres de clippeuse sont introduits pour le fonctionnement de la clippeuse (2),
des paramètres de remplissage sont introduits pour le fonctionnement du groupe de refoulement (5) de la machine de remplissage (1),
une première commande (5) du dispositif de commande établit le profil de vitesse du groupe de refoulement (5) en fonction des paramètres de remplissage,
une deuxième commande (7) du dispositif de commande détermine un profil de mouvement pour les ciseaux de clippeuse (4a,b) en fonction des paramètres de clippeuse et du profil de vitesse du groupe de refoulement (5).

3. Procédé selon la revendication 2, **caractérisé en ce que** comme paramètres de clippeuse, on règle au moins les paramètres suivantes :
le calibre de saucisse, la vitesse des ciseaux de clippeuse, et de préférence en plus la géométrie des ciseaux de clippeuse, et
de préférence en supplément l'accélération des ciseaux de clippeuse.

4. Procédé selon la revendication 2 ou la revendication 3, **caractérisé en ce que** comme paramètres de remplissage, on règle au moins les suivantes :
le volume de portion, la vitesse de remplissage, l'accélération du groupe de refoulement jusqu'à la vitesse de remplissage.

5. Procédé selon l'une au moins des revendications 1 à 4, **caractérisé en ce que** pour le profil de vitesse du groupe de refoulement (5), on détermine les grandeurs suivantes : la durée de mise en portion au cours de laquelle le groupe de refoulement refoule du produit de remplissage, la vitesse de remplissage (V_{Füll}) , ainsi que des durées de rampe (t_{Auf}, t_{Ab}) durant lesquelles le groupe de refoulement est accéléré jusqu'à la vitesse de remplissage (V_{Füll}) , et la vitesse de remplissage (V_{Füll}) diminue à nouveau.

6. Procédé selon l'une au moins des revendications 1 à 5, **caractérisé en ce que** les paramètres pour la clippeuse et les paramètres pour la machine de remplissage sont réglés sur un tableau de commande (10a) sur la clippeuse.

7. Procédé selon l'une au moins des revendications 1 à 6, **caractérisé en ce que** la première et la deuxième commande (7, 8) sont regroupées dans un dispositif de commande commun (7, 8).

8. Procédé selon l'une au moins des revendications précédentes, **caractérisé en ce que** le profil de vitesse du groupe de refoulement (5) indique une vitesse en fonction du temps, procédé d'après lequel au cours d'une durée de mise en portion t_{Portion}, dans un premier tronçon de rampe, pendant une première durée de rampe t_{Auf}, la vitesse augmente d'une vitesse de remplissage minimale Vₘᵢₙ à une vitesse de remplissage maximale V_{Füll}, et est maintenue au niveau élevé pour une durée de remplissage t_{Füll}, et est à nouveau abaissée, dans un deuxième tronçon de rampe, pendant une deuxième durée de rampe t_{Ab}, jusqu'à la valeur Vₘᵢₙ, avec de préférence Vₘᵢₙ = 0,
d'après lequel pendant une pause de mise en portion, qui suit, pendant un intervalle de temps t_{Pause}, la vitesse de remplissage correspond à Vₘᵢₙ, et est de préférence égale à 0, et
d'après lequel pendant la durée de mise en portion (tₚₒᵣₜᵢₒₙ), la vitesse des ciseaux de clippeuse (4a,b) est abaissée à une vitesse de passage (V_{Durchlauf}), et augmente à nouveau, avec V_{Durchlauf} ≠ 0.

9. Procédé selon la revendication 8, d'après lequel pendant la durée de mise en portion, la vitesse des ciseaux de clippeuse est abaissée à 0, pendant un premier intervalle de temps (t_{Clipstopp}), et est maintenue à 0 pendant une durée déterminée (t_{Clippause}), et est ensuite à nouveau augmentée au cours d'un deuxième intervalle de temps (T_{Anstieg}) .

10. Procédé selon l'une au moins des revendications 8 ou 9, **caractérisé en ce que** le profil de mouvement des ciseaux de clippeuse (4a,b) représente l'étendue du mouvement des ciseaux de clippeuse en fonction du temps, et
pendant une durée de mise en portion t_{Portion} du groupe de refoulement (5), les ciseaux de clippeuse (4a,b) s'écartent mutuellement jusqu'à une distance d'espacement réciproque maximale, et se rapprochent ensuite à nouveau, les ciseaux présentant pendant la durée de mise en portion (t_{Portion}), du groupe de refoulement, une distance d'espacement réciproque telle, que le calibre de saucisse produit puisse passer à travers l'ouverture (8) entre les ciseaux.

11. Procédé selon l'une au moins des revendications 8 à 10, **caractérisé en ce que** pendant la pause de mise en portion du groupe de refoulement, les ciseaux de clippeuse (4a,b) se rapprochent mutuellement de manière telle, que le boyau de saucisse (9) soit séparé, puis le clip ou clip double est posé entre les deux ciseaux de clippeuse (4a,b), et ensuite les ciseaux s'écartent à nouveau, les ciseaux présentant au début de la durée de mise en portion (t_{Portion}), suivante, une distance d'espacement telle, que le calibre de saucisse produit puisse passer à travers l'ouverture (8) entre les ciseaux (4a,b), la position correspondante (P_{Start}) des ciseaux de clippeuse (4a,b)étant déterminée automatiquement par la commande en tant que fonction de la géométrie des ciseaux de clippeuse et du calibre de saucisse réglé.

12. Dispositif de mise en oeuvre du procédé selon l'une au moins des revendications 1 à 11, comprenant une machine de remplissage (1) et une machine à clipper dite clippeuse (2), une interface de communication (3) entre la machine de remplissage (1) et la clippeuse (2) pour l'échange de données de processus, ainsi qu'au moins un dispositif de commande, qui règle automatiquement le profil de mouvement de ciseaux de clippeuse (4a,b) opposés et le profil de vitesse d'un groupe de refoulement (5) de manière à ce qu'ils soient mutuellement adaptés l'un à l'autre, la commande étant configurée de manière telle, que l'instant de démarrage d'un cycle de groupe de refoulement soit déterminé en fonction de la position de ciseaux de clippeuse (4a,b), et qu'un signal de démarrage soit envoyé au groupe de refoulement (5) au plus tôt lorsqu'une distance d'espacement des ciseaux de clippeuse (4a,b) est suffisamment grande pour qu'un calibre de saucisse produit, soit apte à passer dans l'ouverture (8) des ciseaux de clippeuse.

13. Dispositif selon la revendication 12, **caractérisé en ce que** le dispositif de commande est conçu de manière à comporter une première commande (6), qui établit le profil de vitesse du groupe de refoulement (5), en fonction de paramètres de remplissage ayant été introduits, ainsi qu'une deuxième commande (7), qui détermine un profil de mouvement pour les ciseaux de clippeuse (4a,b), en fonction de paramètres de clippeuse ayant été introduits et du profil de vitesse du groupe de refoulement (5).
